# EUROPEAN PATENT APPLICATION

(11) **EP 4 814 449 A1**
(43) Date of publication of application: **30.09.2026**
(21) Application number: 26163469.5
(22) Date of filing: 10.03.2026
(51) Int. Cl.: G01G 19/07

(54) **VIBRATION OF SHOCK STRUTS OF AN AIRCRAFT TO RELIEVE A PORTION OF STATIC FRICTION FORCES ACTING ON THE SHOCK STRUTS BEFORE DETERMINATION OF AIRCRAFT WEIGHT AND BALANCE**

(30) Priority: 28.03.2025 US 202519093388
(71) Applicant: The Boeing Company, Arlington, VA 22202 (US)
(72) Inventor: DOBBERFUHL, James Philip, Clinton, WA (US); PLASS, Christopher Edward, Snohomish, WA (US)
(74) Representative: Plasseraud IP

(57) **Abstract**

A system for an aircraft includes a shock strut of a landing gear. The system includes one or more excitation devices coupled to the shock strut. The one or more excitation devices are configured to vibrate the shock strut to enable the shock strut to transition from a first static state where an outer cylinder of the shock strut is stationary relative to an inner cylinder of the shock strut to a dynamic state where the outer cylinder moves relative to the inner cylinder and to transition from the dynamic state to a second static state. The system also includes a resonance system coupled to the one or more excitation devices. The resonance system is configured to provide a first signal to the one or more excitation devices to activate the one or more excitation devices to vibrate the shock strut.

## Description

### FIELD OF THE DISCLOSURE

The present disclosure is generally related to vibration of shock struts of an aircraft to relieve portions of static friction forces acting on the shock struts before determination of aircraft weight and balance.

### BACKGROUND

A weight of an aircraft and balance of the aircraft are factors affecting aircraft functionality. Weight and balance of the aircraft influence many factors associated with a flight of the aircraft including fuel needed for the flight, runway lengths needed for takeoff and landing, horizontal stabilizer settings, handling characteristics, operating and performance parameters, etc. Commercial aircraft are required to perform a weight and balance check prior to each flight. The overwhelming majority of commercial airline and freight operations rely on load masters to perform a weight and balance check. The weight and balance check is based on an empty weight associated with the aircraft without passengers, crew, and cargo; fuel quantity; weighed cargo; estimated cargo weight; estimated body weight and estimated baggage weight of passengers and crew based on a count of the passengers and crew; other estimates; and combinations thereof. It is desirable to reduce inaccuracies due to the use of estimated weights based on one or more measurable conditions associated with the aircraft.

Weight scales may be used to determine the weight and the balance of the aircraft. Having weight scales at each location where aircraft are loaded and unloaded is impractical due to expense, increased turnaround time, maintenance needed for the weight scales, and other factors. Systems that enable determination of the weight and balance of an aircraft without the use of weight scales (e.g., onboard weight and balance systems and offboard weight and balance systems that receive input data transmitted from aircraft and provide output back to the aircraft) are available, but such systems may require significant amounts of tuning and maintenance. Many operators have disabled such systems because of additional time and cost incurred due to unreliability associated with functionality and accuracy of such systems. It is desirable for an aircraft with shock struts (e.g., a passenger aircraft or a cargo aircraft that includes a landing gear system with oleo-pneumatic shock struts) to include a system configured to relieve a portion of static friction force in the shock struts by vibration before the weight and balance of the aircraft are determined to facilitate accurate determination of the weight and balance of the aircraft.

### SUMMARY

In a particular implementation, a system for an aircraft is proposed in accordance with the appended claim 1.

In another particular implementation, an aircraft is proposed in accordance with the appended claim 7.

In another particular implementation, a method is proposed in accordance with the appended claim 11.

The features, functions, and advantages described herein can be achieved independently in various implementations or may be combined in yet other implementations, further details of which can be found with reference to the following description and drawings.

### BRIEF DESCRIPTION OF THE DRAWINGS

FIG. 1 is a block diagram of an example aircraft.
FIG. 2 depicts a side view representation of the example aircraft.
FIG. 3 is an example flow chart of an implementation of an example method of use of a computer system of an aircraft to cause vibration of shock struts to relieve a portion of static friction forces acting on the shock struts before determination of aircraft weight and balance.
FIG. 4 is an example flow chart illustrating a life cycle of an aircraft.
FIG. 5 is an example block diagram of a computing environment including a computing device configured to support aspects of computer-implemented methods and computer-executable program instructions (or code) according to the present disclosure.

### DETAILED DESCRIPTION

The present disclosure describes vibration of shock struts of an aircraft to relieve a portion of static friction forces acting on the shock struts before determination of aircraft weight and balance. The aircraft transports passengers, cargo, or both, and the aircraft includes multiple landing gear, where each landing gear has an oleo shock strut. The oleo shock struts act as spring and dampener systems with (1) compression and expansion of gas (e.g., nitrogen) acting like springs and (2) passage of fluid (e.g., hydraulic fluid) through orifice plates acting as dampeners to accommodate forces applied to the aircraft associated with landing and taxiing of the aircraft by heat generation and heat dissipation.

A weight and balance system determines the weight and balance of the aircraft. In some implementations, the weight and balance system is an onboard weight and balance system that utilizes a computer system of the aircraft to determine the weight and balance of the aircraft based on sensor data and provides first output associated with the weight and balance to one or more output devices. In other implementations, the weight and balance system is an offboard weight and balance system. The offboard weight and balance system utilizes a computer system external to the aircraft to receive sensor data from the aircraft via a communication system, process the sensor data to determine the weight and balance of the aircraft, and provide the weight and balance as output to the computer system of the aircraft. The computer system of the aircraft provides first output associated with the weight and balance to one or more output devices.

The weight of the aircraft is the sum of vertical forces between the ground and each of the landing gear of the aircraft. The balance of the aircraft is determined as one or more centers of gravity (CG) relative to a reference point based on the vertical forces of the landing gear, the weight of the aircraft, and axial distances between effective contact areas of the landing gear with the ground and the reference point. The weight and balance of the aircraft are determined based on loads on the shock struts of the landing gear. The loads on the shock struts are determined based on gas pressures in the shock struts when the shock struts are in static states, after transitioning from dynamic states to the static states, to allow calculations to compensate for presence of static friction forces in the shock struts.

Each shock strut of the landing gear system of the aircraft supports a portion of the weight of the aircraft. A shock strut includes an inner cylinder positioned in an outer cylinder with the gas in a chamber in the outer cylinder. The outer cylinder is coupled to first support structure attached to a body of the aircraft. The inner cylinder is coupled to second support structure (e.g., a wheel assembly) that contacts the ground. Torsion links pivotally coupled to the inner cylinder, the outer cylinder, and each other to prevent rotation of the inner cylinder relative to the outer cylinder while still allowing the outer cylinder to move toward or away from the inner cylinder. Movement of the outer cylinder toward the inner cylinder results in compression of the gas and movement of the outer cylinder away from the inner cylinder results in expansion of the gas. In other implementations, the shock strut, the support structures, or both, can have a different configuration.

For a frictionless shock strut, a change to a load on the outer cylinder results in movement of the inner cylinder relative to the outer cylinder and a corresponding change to the gas pressure in the shock strut. The load on the shock strut is equal to a first force applied by the gas to the shock strut. The first force is equal to the gas pressure (P) multiplied by an applied force surface area (A) associated with the outer cylinder of the shock strut that is acted on by the gas and is normal to a direction of travel of the outer cylinder relative to the inner cylinder. For the frictionless gas strut, changes in gas pressure in the shock strut due to temperature changes also result in movement of the outer cylinder relative to the inner cylinder.

Real life shock struts are generally not frictionless systems. A change to a load on a shock strut, or a change in pressure in the shock strut due to temperature change, when the shock strut is in a static state results in a change to a static friction force acting on the shock strut. When the static friction force does not reach a breakout friction force (e.g., a compression breakout friction force when the load is increased and an expansion breakout friction force when the load is decreased), the shock strut remains in a static state such that the outer cylinder is stationary relative to the inner cylinder and the gas pressure in the shock strut does not change unless there is a temperature change of the gas in the shock strut. The load on the shock strut is supported by the first force due to gas pressure in the shock strut (i.e., P multiplied by A) and the static friction force. The static friction force is a compression static friction force with a positive value when the first force is less than the load on the shock strut, the static friction force is zero when the first force equals the load on the shock strut, and the static friction force is an expansion static friction force with a negative value when the first force is greater than the load on the shock strut. When a breakout friction force is reached, the static friction force changes to a dynamic friction force and the outer cylinder moves relative to the inner cylinder.

The static friction force can be large before a breakout friction force is reached. For example, the compression static friction force may be over 10,000 pounds (lbs) for a shock strut of nose landing gear of an airplane with a weight of about 700,000 lbs before a load added to the shock strut of the nose landing gear causes the compression static friction force to reach a compression breakout friction force, and the compression static friction force may be over 52,000 lbs for a shock strut of a main landing gear of the airplane before a load added to the shock strut of the main landing gear causes the compression static friction force to reach a compression breakout friction force. Determining the weight and balance of the aircraft based only on the gas pressure in the shock struts of the aircraft without compensation for the static friction forces of the shock struts can result in significant errors.

When the load on the shock strut causes the static friction force to reach a breakout friction force (i.e., an increase in the load causes the static friction force to reach a breakout compression friction force or a decrease in the load causes the static friction force to reach a breakout expansion friction force), the shock strut transitions from a first static state to a dynamic state such that the outer cylinder is in motion relative to the inner cylinder and the gas pressure in the shock strut changes. Movement of the outer cylinder relative to the inner cylinder is a result of an imbalance in the load and the forces countering the load, which are the first force due to gas pressure in the shock strut and a dynamic friction force between the outer cylinder and the inner cylinder. The shock strut remains in the dynamic state until movement of the inner cylinder relative to the outer cylinder stops when the shock strut transitions to a second static state because the load is balanced by the first force due to the gas pressure in the shock strut plus the dynamic friction force. At the transition between the dynamic state and the static state, the dynamic friction force instantaneously transitions to the static friction force and the dynamic friction force is the same as the static friction force, which is referred to herein as the friction force at the dynamic-static transition. The friction force at the dynamic-static transition is a compression friction force when the gas pressure in the shock strut increased during the dynamic state and is an expansion friction force when the gas pressure in the shock strut decreased during the dynamic state. After the transition to the second static state, the shock strut remains in the second static state until the static friction force reaches another breakout friction force due to a change in load, change in the static friction force due to temperature change, or both.

The breakout friction forces of a shock strut after a transition to a dynamic state due to a change in load are detectable (e.g., based on analysis of pressure data, position data associated with the outer cylinder and the inner cylinder, or both), vary with the load on the shock strut (e.g., a first compression breakout friction force for a low load and low gas pressure is greater than a second compression breakout friction force for a high load and high gas pressure), are not consistently repeatable, and are difficult to accurately predict. The dynamic-static transitions are detectable (e.g., based on analysis of the gas pressure data, the position data, or both), are repeatable, and the load on the shock strut can be determined within an acceptable range of accuracy based on measurable conditions (e.g., gas pressure, gas temperature, or both) by compensating for the static friction forces at the dynamic-static transitions. At the dynamic-static transition of a particular shock strut, the load on the shock strut determined only based on the pressure (i.e., P multiplied by A) is within about 2.5% of the actual load on the shock strut (e.g., the load determined using calibrated weight scales) when the gas temperature in the shock strut is within a particular temperature range.

A correction factor (e.g., a 2.5% correction to account for static friction at the dynamic-static transition when the gas temperature in the shock strut is within the particular temperature range) applied to the load determined based on the pressure at the dynamic-static transition increases an accuracy of the determined load and subsequent values determined based on the load (e.g., the weight and balance of the aircraft). The correction factor results in a higher load when the dynamic state before the dynamic-static transition indicates the friction force at the dynamic-static transition is a compression friction force and a lower load when the dynamic state before the dynamic-static transition indicates the friction force at the dynamic-static transition is an expansion friction force. The correction factor can be adjusted for operation in very cold or very hot conditions (e.g., gas temperatures in the shock struts less than -15 degrees Celsius or over 35 degrees Celsius). In some implementations, experimentally determined correction factors at different temperatures, empirically determined correction factors at different temperatures, or both, for the aircraft are stored in a table and utilized when calculations are performed to determine the weight of the aircraft. An interpolation technique (e.g., linear interpolation) may be used to determine a correction factor when a current temperature does not correspond to a temperature in the table.

Before determining the weight and balance of the aircraft, the aircraft is subjected to one or more actions configured to cause the shock struts to transition from first static states to dynamic states, and from the dynamic states to second static states. The one or more actions may include applying vibrations to the shock struts to cause the shock struts to undergo transitions from the first static states to the dynamic states and transitions from the dynamic states to the second static states, application of a mechanical force to the shock strut that causes travel of the outer cylinders relative to the inner cylinders when removed (e.g., applying forces using jacks or actuators to the torsion links of the shock struts coupled to the outer cylinder such that outer cylinders move relative to the inner cylinders when the forces are released), changing pressure in each of the gas struts by addition or removal of gas or fluid until initiation of movement of the outer cylinder of the shock strut relative to the inner cylinder, taxiing the aircraft to induce forces applied to the shock struts that cause movement of the outer cylinders relative to the inner cylinders, etc. Application of vibration to the shock struts to cause travel of the outer cylinders relative to the inner cylinders provides a system with a number of advantages over other actions including no need to perform one or more tasks after the action (e.g., moving the aircraft to a location and adding gas or fluid to, or releasing gas or fluid from, the gas struts), less weight added to the aircraft and fewer modifications to the landing gear as compared to weight and modifications needed for systems that apply mechanical forces to the shock struts and systems that change pressure by addition and/or release of gas or fluid in the shock struts, and no need for personnel involvement other than input to initiate the action.

One or more excitation devices are coupled to the outer cylinder of each shock strut and first signals are provided to the excitation devices to cause vibration of the excitation devices before determination of the weight and balance of the aircraft. Vibration of a shock strut by the one or more excitation devices causes axial propagation, circumferential propagation, radial propagation, or combinations thereof, of vibrations in the outer cylinder. The first signal sent to the excitation device(s) of a shock strut include one or more frequencies that cause resonance of the outer cylinder that increases amplitudes of vibrations applied to the outer cylinder by the one or more excitation devices. The damping ratio of the outer cylinder allows for resonance without a steady state variation of amplitude large enough to affect seals of the shock struts or otherwise damage the shock strut.

Resonance of the outer cylinder of a shock strut makes the shock strut behave more like a frictionless shock strut which creates a reduced compression breakout friction force and creates an increased expansion breakout friction force associated with the shock strut. The shock strut is designed so that, over a large pressure range, the reduced compression breakout friction force when the outer cylinder is vibrated is slightly above, at, or slightly lower than a compression friction force at a dynamic-static transition when the excitation devices are not activated, and so that, over a large pressure range, the increased expansion breakout friction force when the outer cylinder is vibrated is slightly above, at, or slightly below a corresponding expansion friction force at a dynamic-static transition when the excitation devices are not activated.

When the one or more excitation devices coupled to a shock strut are activated, the outer cylinder moves relative to the inner cylinder when the static friction force is greater than or equal to the reduced compression breakout force or when the static friction force is less than or equal to the increased expansion breakout force. When movement of the outer cylinder relative to the inner cylinder of a shock strut is detected, activation of the one or more excitation devices is stopped for the shock strut, and the outer cylinder continues to move relative to the inner cylinder until the dynamic-static transition occurs for the shock strut. The load on the shock strut is determined using an appropriate correction factor based on the behavior during the dynamic state before the dynamic-static transition. The friction force at the dynamic-static transition is a compression friction force if the outer cylinder moved toward the inner cylinder during the dynamic state and the gas pressure increased, and the friction force at the dynamic-static transition is an expansion friction force if the outer cylinder moved away from the inner cylinder and the gas pressure decreased. The loads on the shock struts of each of the landing gear after subjecting the shock strut to vibration are used in determining the vertical loads on the landing gear, and the vertical loads on the landing gear are used to determine the weight and balance of the aircraft.

When the one or more excitation devices coupled to a shock strut are activated, the outer cylinder remains stationary relative to the inner cylinder when the static friction force is between the reduced compression breakout friction force and the increased expansion breakout friction force. In response to the shock strut remaining in a static state when vibration is applied to the shock strut, the shock strut may be subjected to one or more iterations of additional vibration at greater amplitude, longer duration, or both, to determine if the shock strut will undergo a dynamic-static transition.

If the one or more iterations cause a dynamic state and a corresponding dynamic-static transition, the vertical load on the landing gear is determined using an appropriate correction factor based on whether the friction force at the dynamic-static transition is a compression friction force or an expansion friction force. If the one or more iterations do not cause a dynamic state and a corresponding dynamic-static transition of one or more of the shock struts, a determination of whether the friction force is a compression friction force or an expansion friction force for the one or more shock struts is made based on response of the other shock struts to applied vibrations caused by the excitation devices or based on a most recent dynamic-static transition that occurred before activation of the excitation devices. For example, if a first shock strut of a first main landing gear was stationary during vibration of the shock struts, and a second shock strut of a second main landing gear changed to a dynamic state and the friction force at the dynamic-static transition is determined to be an expansion friction force, the same correction factor used in determining the vertical load on the second main landing gear (e.g., a correction factor of -0.025) is used in determining the vertical load on the first main landing gear. In some implementations, no correction factor associated with a shock strut that remained stationary during vibration of the shock strut is determined based on the behavior of the other shock struts. For example, if a first shock strut of a nose landing gear was stationary during vibration of the shock struts, use of a correction factor in determining the vertical load on the nose landing gear may be ignored because the magnitude of the vertical load on the nose landing gear is much smaller than the magnitudes of the vertical loads on the main landing gear and a larger error associated with the nose landing gear will not have a large effect on errors associated with the weight of the aircraft and the balance of the aircraft. Output weight and balance of the aircraft may include indicia or a warning that indicates which shock struts did not undergo dynamic-static transitions due to activation of the excitation devices, an indication that the weight and balance may have greater error due to the shock strut(s) that did not undergo dynamic-static transitions, or both.

A weight and balance unit of the aircraft obtains the weight and balance of the aircraft. In implementations where the weight and balance unit is an onboard weight and balance system, the weight and balance unit determines the weight and balance based on input data determined from sensor data and parameters associated with the aircraft. In implementations where the weight and balance unit obtains the weight and balance from an external weight and balance system, the weight and balance unit provides the input data to the external weight and balance system and the weight and balance of the aircraft is provided as output from the external weight and balance system.

The weight and balance unit provides the weight and balance of the aircraft obtained by the weight and balance unit as data to flight computer(s) of the aircraft. The pilots of the aircraft can access the weight and balance of the aircraft presented as graphic images, numeric values, or combinations thereof, after a loading/unloading cycle of the aircraft is completed. Based on the weight of the aircraft, the pilots can determine if the fuel load is right for the aircraft and can have more fuel added or some fuel removed when needed. The flight computer(s) can also provide warnings, via visual output, audio output, haptic output, or combinations thereof, to the pilots of the aircraft when the weight of the aircraft, the balance of the aircraft, or both, are outside of weight limits and balance limits.

Additionally, the onboard weight and balance unit can provide the obtained weight and balance to a load master tasked with loading/unloading the aircraft. The load master determines an estimate of the weight and balance and compares the estimated weight and balance with the weight and balance provided by the weight and balance unit. If significant discrepancies exist between the values for weight and balance determined by the load master and the values provided by the onboard weight and balance system, the cause of the discrepancies can be addressed by the load master and/or pilots before releasing the aircraft for flight.

A technical advantage of vibrating shock struts of an aircraft to relieve a portion of static friction forces acting on the shock struts before determination of aircraft weight and balance by a weight and balance unit is that the weight and balance unit provides repeatable, reliable, and accurate determination of a weight and CG of the aircraft while the aircraft is at a gate or stand without the need for weight scales. Accuracy of the determined weight can consistently be within about 3%, 2.5%, or 1% of the actual weight of the aircraft. Vibration of the shock struts is accomplished by activation of excitation devices coupled to the shock struts. Technical advantages of use of the excitation devices to vibrate the shock struts before the weight and balance of the aircraft is determined is that the system is relatively lightweight and simple as compared to systems that induce dynamic states in the shock struts by adjusting gas pressure or systems that apply mechanical forces to the shock struts to allow relative movement of cylinders of the shock struts when the mechanical forces are removed, and the use of excitation devices does not require additional personnel as does moving the aircraft to cause movement of the outer cylinders of the shock struts relative to the inner cylinders.

The figures and the following description illustrate specific exemplary implementations. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

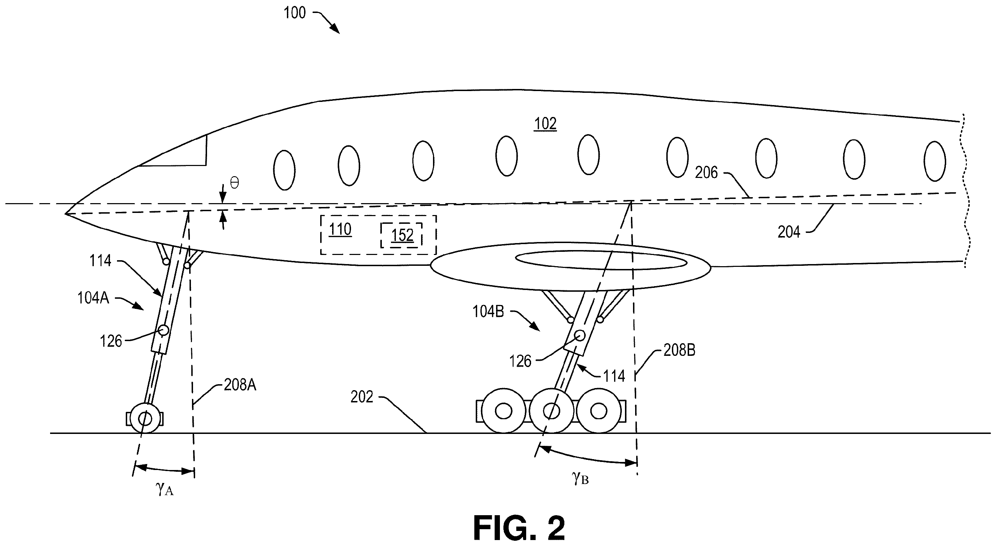

Particular implementations are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to FIG. 2, multiple landing gear 104 are illustrated and associated with reference numbers 104A-C. When referring to a particular one of the landing gear 104, such as the landing gear 104A, the distinguishing letter "A" is used. However, when referring to any arbitrary one of these landing gear 104, the reference number 104 is used without a distinguishing letter.

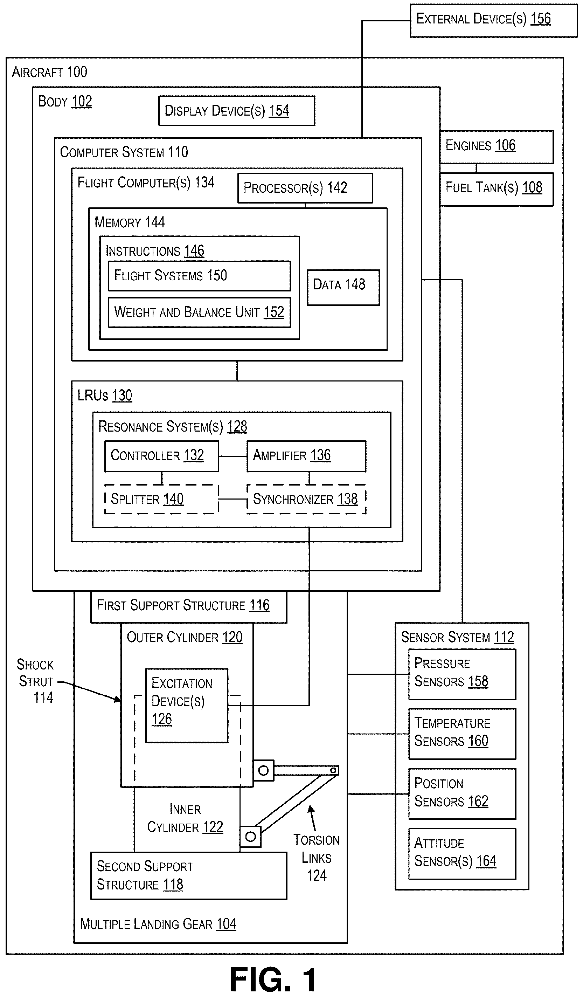

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts an aircraft 100 including one or more resonance systems 128, which indicates that in some implementations the aircraft 100 includes a single resonance system 128 and in other implementations the aircraft 100 includes multiple resonance systems 128. For ease of reference herein, such features are generally introduced as "one or more features" where the description of the feature is used in place of "features" (e.g., computer systems) and subsequently referred to using "feature(s)" where the description of the feature is used in place of the feature (e.g., computer system(s)), unless a specific singular or plural feature is intended.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements. As used herein, A "and/or" B may mean that either "A and B", or "A or B", or both "A and B" and "A or B" are applicable or acceptable.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1 depicts a block diagram of an aircraft 100. The aircraft includes a body 102 (e.g., a fuselage, wings, a tail section, etc.), multiple landing gear 104 coupled to the body 102, engines 106 coupled to the body 102 to power the aircraft 100, one or more fuel tanks 108 configured to hold fuel for the engines 106, a computer system 110 within the body 102, and a sensor system 112 configured to provide data to the computer system 110. Particular features of the aircraft 100 are annotated in FIG. 1. It should be understood that the aircraft 100 includes many additional features (e.g., communication systems, control surfaces, airstream sensors, navigation sensors, etc.) common to private, commercial, or military aircraft, even though such features are not annotated in FIG. 1. The aircraft 100 may be piloted by one or more pilots aboard the aircraft 100, may be remotely controlled by one or more pilots, may be an autonomous aircraft, or combinations thereof. The aircraft 100 may be a fixed-wing craft, a rotary wing craft, or a hybrid aircraft.

The landing gear 104 support the aircraft 100 on the ground when the aircraft 100 is not in flight. In some implementations, the landing gear 104 include nose landing gear, a right main landing gear, and a left main landing gear. Each landing gear 104 includes a shock strut 114 coupled to the body 102 by first support structure 116 and coupled to second support structure 118 (e.g., wheels, axles, supports, brakes, etc.) that contacts the ground when the aircraft 100 is not in flight.

Each shock strut 114 is an oleo strut including an outer cylinder 120 and an inner cylinder 122 positioned partially in the outer cylinder 120 to allow movement of the outer cylinder 120 relative to inner cylinder 122 along a longitudinal axis of the shock strut 114. The inner cylinder 122 depicted in FIG. 1 includes a portion shown in dashed lines to indicate that the portion is located inside of the outer cylinder 120. Torsion links 124 of a shock strut 114 are pivotally coupled to the outer cylinder 120, the inner cylinder 122, and each other to prevent rotation of the outer cylinder 120 relative to the inner cylinder 122 while allowing the outer cylinder 120 to move toward or away from the inner cylinder 122.

Each shock strut 114 includes a gas (e.g., nitrogen) and a fluid (e.g., hydraulic fluid) in an interior chamber formed by the outer cylinder 120 and the inner cylinder 122. In some implementations, one or more separators are positioned between the gas and the fluid (e.g., to inhibit foaming of the fluid). Each shock strut 114 includes bearings (e.g., DU bearings with a porous bronze interlayer impregnated with a fluoropolymer and lead to reduce friction and increase wear resistance) to enable the outer cylinder 120 to move relative to the inner cylinder 122. The bearings include a first bearing coupled to the inner cylinder 122 near an end of the inner cylinder 122 positioned in the outer cylinder 120, and a second bearing coupled to the outer cylinder 120 near an end of the outer cylinder 120 where the inner cylinder 122 enters the outer cylinder 120. Multiple seals near the second bearing retain the fluid and the gas in the shock strut 114. Movement of the outer cylinder 120 of a shock strut 114 relative to the inner cylinder 122 forces fluid through an orifice plate and changes the level of the fluid in the interior chamber and gas pressure in the interior chamber. As described herein, the outer cylinder 120 is coupled to the first support structure 116 and the inner cylinder 122 is coupled to the second support structure 118. In other implementations, the outer cylinder 120 is coupled to the second support structure 118 and the inner cylinder 122 is coupled to the first support structure 116.

One or more excitation devices 126 are coupled to each of the shock struts 114. The excitation device(s) 126 for a shock strut 114 are coupled to an outer surface of the outer cylinder 120 of the shock strut 114. The outer surface includes a mount for each excitation device 126 that enables the excitation device 126 to be attached to the outer cylinder 120 (e.g., threaded onto a shaft). The excitation devices 126 can be any type of device configured to provide vibration to the outer cylinder 120. In some implementations, the excitation devices 126 may be electromagnetic shakers, piezo electric actuators, or combinations thereof.

The excitation devices 126 are activated by first signals received from one or more resonance systems 128. The resonance system(s) 128 may be line-replaceable units (LRUs) 130 of the computer system 110. Each resonance system 128 may include at least one of a controller 132, an amplifier 136, a synchronizer 138, or combinations thereof. In some examples, each resonance system 128 may include the controller 132 to generate a second signal with particular frequencies at particular amplitudes and durations (e.g., 1 s, 3 s, 5 s, or some other amount of time) in response to an activation signal received from one or more flight computers 134 of the computer system 110. The activation signal can be provided from the flight computer(s) 134 in response to user input (e.g., input from a load master or ground crew) or can be automatically generated in response to the flight computer(s) 134 determining satisfaction of one or more rules (e.g., completion of a loading/unloading cycle).

In some examples, the second signal may be provided to the amplifier 136 that maintains the same frequencies and time durations but increases the power of the second signal to the first signal provided as input to the excitation device(s) 126 coupled to the resonance system 128 to cause vibration of the one or more excitation devices 126 and the shock strut 114. The gain of the amplifier may be 2, 5, 10, or some other gain. In some implementations, the amplifier 136 causes the power of the first signal to increase throughout the duration of the first signal. The frequency or frequencies included in the first signal, the duration of the first signal, and the gain and power profile applied by the amplifier 136 may be determined experimentally based on responses of one or more representative shock struts 114 (e.g., a representative shock strut 114 of a nose landing gear 104 and a representative shock strut 114 of a main landing gear 104 for a particular type of aircraft 100), may be determined experimentally for each aircraft 100 during manufacture of the aircraft 100 or after replacement of one or more of the landing gear 104, or a combination thereof.

In some examples, for each shock strut 114 that includes more than one excitation device 126, the resonance system 128 for the shock strut 114 may include the synchronizer 138 coupled to the amplifier 136 to adjust the phases of the first signals provided to the excitation devices 126 to control an amount of interference generated by the vibrations in the outer cylinder 120 due to the excitation devices 126. The synchronizer 138 of the resonance system(s) 128 depicted in FIG. 1 is shown in dashed lines to indicate that a synchronizer 138 for a particular resonance system 128 is optional and may not be present for implementations that include a single excitation device 126 attached to a shock strut 114 coupled to the particular resonance system 128.

In some implementations, the aircraft 100 includes a resonance system 128 for each shock strut 114. In other implementations, the aircraft includes a single resonance system 128 for all of the shock struts 114 or the aircraft 100 includes a first resonance system 128 for one or more first shock struts 114 with first characteristics and a second resonance system 128 for one or more shock struts 114 with second characteristics. For example, a first shock strut 114 coupled to a first resonance system 128 is a component of a nose landing gear 104 and second shock struts 114 coupled to a second resonance system 128 are each a component of a main landing gear 104 that resonates at different frequencies than the shock strut 114 of the nose landing gear 104. When the second resonance system 128 provides first signals to the excitation device 126 associated with two shock struts 114 of the main landing gear 104, the resonance system 128 includes a splitter 140 coupled to the amplifier 136 and the controller 132. When the controller 132 determines that a first shock strut 114 transitioned to a dynamic state during provision of the first signal to the first shock strut 114, the controller sends a signal to the splitter 140 to stop continued provision of the first signal to the first shock strut 114. The splitter 140 of the resonance system(s) 128 depicted in FIG. 1 is shown in dashed lines to indicate that a splitter 140 for a particular resonance system 128 is optional and may not be present for implementations where a particular resonance system 128 is coupled to excitation device(s) 126 attached to only one shock strut 114.

The gas in each of the shock struts 114 supports a portion of the weight of the aircraft 100 when the aircraft 100 is on the ground. The load on a shock strut 114 in a static state is equal to the first force (i.e., gas pressure multiplied by the applied force surface area A of the shock strut 114) and the static friction acting on the shock strut 114. The vertical ground load of the landing gear 104 includes the vertical component of the load on the shock strut 114 plus the weight of the inner cylinder 122, the weight of the fluid in the interior chamber, and the weight of the second support structure 118. In some embodiments, the computer system 110 is configured to determine the vertical ground load of the landing gear 104 based on output of the one or more pressure sensors 158 after activation of the one or more excitation devices 126, a weight of the aircraft 100, a center of gravity of the aircraft 100, or combinations thereof.

The computer system 110 may include the flight computer(s) 134 (e.g., a primary flight computer and one or more backup flight computers), auxiliary computers, and LRUs 130 communicatively coupled to the flight computer(s) 134 via a data bus. Each of the flight computer(s) 134 includes one or more processors 142 and memory 144. The memory 144 includes instructions 146 and data 148 used and generated by the processor(s) 142. The instructions 146 include numerous flight systems 150 associated with operation of the aircraft 100 configured to facilitate operation and use of the aircraft 100 and a weight and balance unit 152. The data 148 includes information used during execution of the instructions 146 by the processor(s) 142 and output generated by the processor(s) 142 during execution of the instructions 146. The data 148 is stored in data structures in the memory 144.

The weight and balance unit 152 obtains the weight and balance of the aircraft 100 and provides first output associated with the weight and balance to output devices. The first output can include the gross weight of the aircraft 100, a zero fuel weight of the aircraft 100 (i.e., gross weight minus fuel weight), the location of the center of gravity of the aircraft 100, warnings associated with the weight of the aircraft 100, warnings associated with the center of gravity of the aircraft 100, other information, or combinations thereof. The output devices include one or more display devices 154 of the aircraft 100 (e.g., flight displays and one or more displays located in a cargo hold of the aircraft 100 accessible by personnel associated with loading/unloading of the aircraft 100), the flight computer(s) 134, one or more external device(s) 156 (e.g., a portable device associated with a load master), audio devices, haptic devices, other types of output devices, or combinations thereof.

In some implementations, the weight and balance unit 152 is an onboard weight and balance system that determines the weight and balance of the aircraft 100 based on data received from the sensor system 112 and the resonance system(s) 128, and first information associated with the aircraft 100 stored in the data 148. In other implementations, the weight and balance unit 152 receives data from the sensor system 112 and information from the resonance system(s) 128, processes the data and information to input for an offboard weight and balance system, sends the input to the offboard weight and balance system (e.g., one of the external devices 156) to determine the weight and balance of the aircraft based on the input and the first information associated with the aircraft 100, and receives output from the offboard weight and balance system indicating the weight and balance of the aircraft 100.

The first information used to determine the weight and balance of the aircraft 100 includes parameters associated with the aircraft 100 (e.g., rake angles of the shock struts 114, the applied force surface area A of each shock strut 114 used to determine the first force acting on the shock strut 114, correction factors for the shock struts 114 to compensate for the friction forces acting on the shock struts 114 at dynamic-static transitions, weight of the inner cylinders 122 and fluid in the shock struts 114, weights of the second support structures 118, axial distances based on a coordinate system from a reference point to an effective contact area of the landing gear 104 with the ground for each landing gear 104, a mean aerodynamic chord associated with a wing of the aircraft 100, a longitudinal distance from the reference point to a leading edge of the mean aerodynamic chord, other information, or combinations thereof). The first information is stored in the data 148, a memory associated with the offboard weight and balance system, or both.

The sensor system 112 provides sensor data from sensors to the computer system 110 for storage and use by the flight computer(s) 134 and the LRUs 130. The sensor data may include at least one of pressure data from pressure sensors 158, temperature data from temperature sensors 160, position data from one or more position sensors 162, and attitude data (e.g., roll angle and pitch angle) from output of one or more attitude sensors 164 associated with the aircraft 100. The computer system 110 includes one or more data filters for sensor data that reduce fluctuations present in the sensor data. Each shock strut 114 may include one or more of the pressure sensors 158 configured to measure gas pressure in the shock strut 114 and one or more of the temperature sensors 160 to measure the gas temperature in the shock strut 114.

One or more position sensors 162 may be coupled to each shock strut 114 to provide sensor data used to determine whether the shock strut 114 is in a dynamic state or a static state, whether the dynamic state results in compression of the gas of the shock strut, or both. The position sensors 162 may include angle detectors that detect angles between the torsion links 124, position sensors to detect a distance between a first point on a first torsion link and a second point on a second torsion link, optical sensors that read indicia on the inner cylinder 122 that indicates the position of the outer cylinder 120 relative to the inner cylinder 122, one or more optical sensors that indicate the exposed chrome height of the inner cylinder 122, other types of sensors, or combinations thereof. A comparison of historical data from the position sensors 162 with current data from the position sensors 162 is also usable to evaluate the operational health of the shock struts 114.

The attitude sensor(s) 164 can be part of an inertial navigation system of the aircraft 100 or can be a separate system. When the aircraft 100 is on the ground, the attitude sensor(s) 164 indicate a pitch angle of the aircraft 100 and a roll angle of the aircraft 100. The onboard weight and balance system or the offboard weight and balance system uses appropriate trigonometric relations to compensate for the pitch angle, the roll angle, or both, when determining the weight and balance of the aircraft 100.

During use of the aircraft 100, the weight and balance unit 152 is used to obtain the weight and balance of the aircraft 100 by calculating the weight and balance when the weight and balance unit 152 is the onboard weight and balance system and by receiving output indicating the weight and balance when the weight and balance of the aircraft 100 are determined by an offboard weight and balance system. The weight of the aircraft 100 is indicated as a gross weight. The gross weight of the aircraft 100 at a particular time after activation of the resonance system(s) 128 to vibrate the shock struts 114 to cause transitions of the shock struts 114 from first static states to dynamic states and from the dynamic states to second static states is determined using the equation: $GW = {\sum }_{i}^{n} {F}_{V , i}$ where *GW* is the gross weight of the aircraft 100, *i* is an index for landing gear 104 of the aircraft 100, *n* is the number of landing gear 104, and *F_{V,i}* is a vertical force of landing gear *i* on the ground.

The balance of the aircraft 100, which is expressed as the CG of the aircraft 100 relative to one or more axes of a three-dimensional rectangular coordinate system, with a reference point at an origin of the coordinate system, is based on moments of the vertical forces on the landing gear 104 relative to the reference point and the gross weight of the aircraft 100. For an airplane, the CG calculations are typically performed only along a longitudinal axis of the coordinate system. The longitudinal axis is aligned with the fore-to aft direction of the aircraft 100 and is orthogonal to a vertical axis (i.e., a height axis) through the reference point and the center of the earth. For other aircraft 100 (e.g., helicopters) and for some airplanes, the CG calculations are performed along a longitudinal axis and a side-to-side axis of the coordinate system that is orthogonal to the longitudinal axis and the vertical axis. The equation for the center of gravity of the aircraft 100 relative to the reference point for the longitudinal axis of the aircraft 100 when the shock struts 114 are in static states is: ${CG}_{long} = \frac{{\sum }_{i}^{n} \left({F}_{V , i}\right) \left({d}_{long , i}\right) \left(cosθ\right)}{GW}$ where *CG_{long}* is the center of gravity of the aircraft 100 along the longitudinal axis relative to the reference point at the particular time, *d_{long,i}* is the distance from the effective contact point of the landing gear *i* on the ground to the reference point along the longitudinal axis, and *θ* is the pitch angle of the aircraft 100. For an aircraft 100 with two main landing gear 104 at a distance from the reference point, and a nose landing gear 104, the longitudinal CG at the particular time is: ${CG}_{long} = {d}_{M} - \frac{{F}_{N} \left({d}_{M}-{d}_{N}\right)}{GW} + {CG}_{height} sin θ$ where *d_{M}* is the distance from the reference point to the effective contact point of the main landing gear on the ground along the longitudinal axis, *F_{N}* is the vertical force on the nose landing gear, *d_{N}* is the distance from the reference point to the effective contact point of the nose landing gear on the ground along the longitudinal axis, and *CG_{height}* is the height center of gravity of the aircraft 100 along the vertical axis relative to the ground.

In some implementations, the longitudinal CG is expressed as a percentage of mean aerodynamic cord of the aircraft 100. The percentage of mean aerodynamic cord is determined by the equation: $CG \left(%MAC\right) = \frac{100 \left({CG}_{long}-LeMAC\right)}{MAC}$ where *CG(%MAC)* is the percentage of mean aerodynamic cord, *LeMAC* is the distance from the leading edge of the mean aerodynamic cord to the reference point along the longitudinal axis, and *MAC* is the mean aerodynamic cord.

For implementations where the side-to-side balance is determined, the center of gravity of the aircraft 100 relative to the reference point for the side-to-side axis of the aircraft 100 is determined using the equation: ${CG}_{s - to - s} = \frac{{\sum }_{i}^{n} \left({F}_{V , i}\right) \left({d}_{s - to - s , i}\right) \left(cos∅\right)}{GW}$ where *CGₛ₋ₜₒ₋ₛ* is the center of gravity of the aircraft 100 along the side-to-side axis relative to the reference point, *d*_{*s*-*to*-*s*,*i*} is the distance from the effective contact point of the landing gear *i* on the ground to the reference point along the side-to-side axis, and Ø is the roll angle of the aircraft 100.

The vertical force on one of the landing gear 104 is the vertical force applied to the shock strut 114 of the landing gear 104 plus weight of the landing gear 104 not supported by the gas of the shock strut 114 (e.g., the inner cylinder 122 of the shock strut 114, the fluid in the shock strut 114, wheels, tires, axles, supports, brakes, etc.). The vertical force on a particular landing gear 104 on the ground when the shock strut 114 of the landing gear 104 is in a static state is determined using the equation: ${F}_{V} = L + {M}_{UN}$ where *L* is the vertical load on the shock strut 114 of the particular landing gear 104 supported by the gas in the shock strut 114 and *M_{UN}* is the weight of the particular landing gear 104 unsupported by the gas of the shock strut 114, which is determined based on parameters associated with the aircraft 100.

The vertical load on the shock strut 114 is the load on the shock strut 114 adjusted for an angle of the shock strut 114 relative to the ground. When the shock strut 114 is extended, the shock strut 114 has a rake angle relative to an axis perpendicular to a longitudinal axis of the aircraft 100, which is the rake *γ* of the shock strut 114. When the aircraft 100 is on the ground, the aircraft 100 has a pitch angle θ relative to the ground. The vertical load on the shock strut 114 is given by the equation: $L = \frac{{F}_{S}}{cos \left(γ-θ\right)}$ where *F_{S}* is the load (force) on the shock strut 114.

The load on a shock strut 114 when the shock strut 114 is at a dynamic-static transition is given by the equation: ${F}_{S} = P ⋅ A + {F}_{F}$ where *P* is the gas pressure in the shock strut 114, *A* is the applied force surface area of the shock strut 114, *P · A* is the first force acting on the shock strut, and *F_{F}* is the friction force at the dynamic-static transition. The friction force at the dynamic-static transition is either a compression friction force when the first force is less than the load, or an expansion friction force when the first force is greater than load.

Analysis of sensor data (e.g., position sensor data, pressure sensor data, or both) determines whether a shock strut 114 is at a dynamic-static transition and whether the friction force at the dynamic-static transition is a compression friction force or an expansion friction force. For example, analysis of sensor data indicates the shock strut 114 is in a dynamic state and the friction force at the dynamic-static transition will be a compression friction force when the position data indicates the outer cylinder 120 of the shock strut is moving toward the inner cylinder 122 of the shock strut 114, the gas pressure data indicates that the gas pressure is increasing, or both; and the dynamic-static transition is indicated when the position data indicates the outer cylinder 120 stops moving relative to the inner cylinder 122, the gas pressure stops changing, or both. The load on the shock strut 114 at a dynamic-static transition is given by the following equations when the friction force is a compression friction force or an expansion friction force: ${F}_{S} = P ⋅ A + {F}_{F , C}$ ${F}_{S} = P ⋅ A - {F}_{F , E}$ where *F_{F,C}* is the magnitude of the compression friction force and *F_{F,E}* is the magnitude of the expansion friction force.

The magnitude of the friction force, both compressive friction force and expansion friction force) at the dynamic-static transition is modeled as being offset from the first force by a correction factor, which is represented by the following equation: ${F}_{F , C} = {F}_{F , E} = \left(P⋅A\right) c$ where *c* is the correction factor. Substituting the friction force from equation (11) into equation (9) and substituting a factored result in equation (7) provides the following equation for determining the vertical load on the shock strut 114 at the dynamic-static transition when the friction force is a compression friction force: $L = \frac{\left(P⋅A\right) \left(1+c\right)}{cos \left(γ-θ\right)}$ Similarly, substituting the friction force from equation (11) into equation (9) and substituting a factored result in equation (8) provides the following equation for determining the vertical load on the shock strut 114 at the dynamic-static transition when the friction force is an expansion friction force: $L = \frac{\left(P⋅A\right) \left(1-c\right)}{cos \left(γ-θ\right)}$

When the aircraft 100 lands, the aircraft 100 taxis to a location (e.g., a gate or a stand). When the aircraft 100 arrives at the location, the flight computer(s) 134 may activate the weight and balance unit 152 without use of the resonance systems 128, to determine the weight and balance of the aircraft 100. Use of the resonance systems 128 is not needed because the shock struts 114 are at or near dynamic-static transitions and the friction force for each shock strut 114 is a compression friction force.

The weight and balance unit 152 updates a first data structure with data for each shock strut 114. The first data structure includes information for each shock strut 114 usable by a weight and balance system to determine the weight and balance of the aircraft. The information in the first data structure includes, for each shock strut, a gas pressure entry and a type of friction force entry for a most recent dynamic-static transition of the shock strut 114 without activation of excitation device(s) 126 coupled to the shock strut 114; and a warning indicator, a gas temperature entry, a gas pressure entry, and a type of friction force entry for each shock strut after an activation cycle of the resonance system(s) 128. The weight and balance unit 152 updates entries in the first data structure for each shock strut 114 corresponding to the gas pressure entry for the most recent dynamic-static transition without activation of the excitation device(s) 126 and a type of friction force entry for the most recent dynamic-static transition with a value corresponding to compression friction force.

The aircraft 100 is subjected to a loading/unloading cycle (e.g., passenger and crew offboarding and boarding, cargo and baggage loading and unloading, waste removal, fueling, food and beverage resupply, etc.). The weight and balance unit monitors sensor data for the shock struts during the loading/unloading cycle to determine occurrence of dynamic-static transitions, gas pressure of the shock struts 114 that undergo dynamic-static transitions at the dynamic-static transitions, and a type of friction force for the shock struts 114 that undergo the dynamic-static transitions. The weight and balance unit updates corresponding entries in the first data structure for shock struts 114 that undergo dynamic-static transitions during the loading/unloading cycle.

After completion of the loading/unloading cycle, input is received by the flight computer(s) 134 to initiate determining the weight and balance of the aircraft 100. The input may be user input from a load master, or ground crew member, associated with the aircraft 100 or may be automatic input in response to a portion of the computer system 110 determining that the aircraft is in a condition ready for departure. In response to the input, the weight and balance unit 152 sends an activation signal to the resonance system(s) 128.

For each resonance system 128 that is coupled to only one particular shock strut 114, the activation signal causes the controller 132 of the resonance system 128 to set a counter to zero; set a value of a gas temperature entry, a value of a gas pressure entry, and a type of friction force indicator in a data structure for the resonance system 128 to zero; and set a warning indicator for the particular shock strut 114 to logical true in the data structure. The counter is increased by one after each time the first signal sent to the excitation device(s) 126 attached to the particular shock strut 114 does not cause the excitation device(s) 126 to transition the particular shock strut 114 to a dynamic state.

The controller 132 generates a second signal with one or more frequencies at particular amplitudes and first durations and sends the second signal and the counter to the amplifier 136. The first durations are based on the counter value. For example, the total duration of the second signal is 5 seconds evenly divided among the frequencies included in the signal when the counter is 0, and the total duration for the second signal increases by 5 seconds for each increase to the counter. As another example, the total duration for the second signal is 5 seconds when the counter is 0 or 1, and the total duration for the second signal increases by 5 seconds when the counter is 2. Other total durations, other duration changes, or no changes to the duration may also be implemented.

The amplifier 136 generates a first signal having the same one or more frequencies and first durations, but increases the power based on the value of the counter, and provides the first signal to the excitation device(s) 126 associated with the particular shock strut 114. For example, the power of the first signal is increased by a factor of 2 when the counter is 0, by a factor of 2.5 when the counter is 1, and by a factor of 2.75 when the counter is 2. Other patterns for the increase to the power may also be implemented.

During provision of the first signal to the particular shock strut 114, the controller 132 analyzes sensor data associated with the particular shock strut 114 to determine if the particular shock strut 114 transitions to a dynamic state. For example, the controller 132 analyzes position data from the position sensor(s) 162 associated with the particular shock strut 114 to determine a change in position of the outer cylinder 120 of the particular shock relative to the inner cylinder 122 at a current time relative to a position of the outer cylinder 120 relative to the inner cylinder 122 before provision of the first signal to the excitation device(s) 126 attached to the particular shock strut 114 and analyzes the gas pressure data for the particular shock strut 114 to determine a change in gas pressure of particular shock strut 114 at a current time relative to the gas pressure of the particular shock strut 114 before provision of the first signal to the excitation device(s) 126 attached to the particular shock strut 114. When the change in position satisfies a first threshold (e.g., the change in position is greater than 0.1 inches), the change in gas pressure satisfies a second threshold (e.g., the change in pressure is greater than 50 psi), or both, the controller 132 determines that the particular shock strut 114 transitioned to a dynamic state.

The resonance system 128 performs one or more iterations of the following procedures responsive to providing the first signal to the particular shock strut 114. Each time the particular shock strut 114 does not transition to the dynamic state during provision of the first signal to the excitation device(s) 126 of the particular shock strut 114, the controller 132 increases the counter by one, generates a new second signal with the one or more frequencies and durations based on the counter when the value of the counter is less than a threshold value (e.g., 3, 4, or some other number), and provides the second signal to the amplifier 136 for amplification based on the value of the counter. The amplifier 136 provides the first signal to the particular shock strut 114 and determines if the first signal causes the particular shock strut 114 to transition to the dynamic state. The procedure then repeats if the particular shock strut 114 does not undergo transition to the dynamic state in response to activation of the excitation device(s) 126 responsive to the first signal. If the particular shock strut 114 transitions to the dynamic state during provision of the first signal to the excitation device(s) 126, the controller 132 causes the amplifier 136 to stop provision of the first signal to the particular shock strut 114; determines a type of friction force (e.g., compression or expansion) associated with the particular shock strut 114 at the dynamic-static transition; changes the type of friction indicator based on the type (e.g., 1 for compression static friction and 2 for expansion static friction); determines the gas temperature of the particular shock strut 114 and sets the value of the gas temperature entry to the gas temperature; determines the gas pressure of the particular shock strut 114 at the dynamic-static transition and sets the value of the gas pressure entry to the gas pressure; changes the warning indicator to logical false; and sends the data structure as input to the weight and balance unit 152. If the counter is equal to the threshold value, the controller 132 determines the gas temperature of the particular shock strut 114 and sets the gas temperature entry to the gas temperature; determines a gas pressure of the particular shock strut 114 and sets the gas pressure entry to the gas pressure; and sends the data structure as input to the weight and balance unit 152.

For each resonance system 128 that is coupled to two or more shock struts 114, the activation signal causes the controller 132 of the resonance system 128 to set a counter to zero, sets a type of friction force indicator in a data structure for the resonance system 128 for each of the two or more shock struts 114 to zero, sets a warning indicator for each of the two or more shock struts 114 to logical true in the data structure, and sets gas temperature and gas pressure entries in the data structure for each of the two or more shock struts 114 to zero. The counter is increased by one when one or more of the shock struts 114 coupled to the resonance system 128 fails to transition to a dynamic state responsive to first signal(s) provided to the excitation device(s) 126 attached to the two or more shock struts 114.

The controller 132 of the resonance system 128 generates a second signal with one or more frequencies at particular amplitudes and first durations and sends the second signal and the counter to the amplifier 136. The first durations may be based on the counter value. The amplifier 136 generates first signals having the same one or more frequencies and first durations as the second signal, but increases the power based on the value of the counter. The amplifier 136 provides the first signals to the excitation device(s) 126 associated with the two or more shock struts 114.

During provision of the first signal to shock struts 114 coupled to the resonance system 128 that have not transitioned to dynamic states based on vibration of the shock struts 114 caused by the first signals, the controller 132 analyzes sensor data to determine if one or more of the shock struts 114 that have not previously transitioned to dynamic states due to provision of first signal(s) to the excitation device(s) coupled to the one or more shock struts 114 transition to the dynamic state due to current application of first signal(s) to the excitation device(s) coupled to the one or more shock struts 114. For example, the controller 132, for each of the one or more shock struts 114, determines the change in position of the outer cylinder 120 of the shock strut 114 relative to the inner cylinder 122 relative to the position of the outer cylinder 120 of the shock strut 114 relative to the inner cylinder 122 before provision of the first signal(s) to the excitation device(s) 126 attached to the shock strut 114 and determines the change in gas pressure of shock strut 114 at a current time relative to the gas pressure of the shock strut 114 before provision of the first signal to the excitation device(s) 126 attached to the shock strut 114. When the change in position satisfies the first threshold, the change in gas pressure satisfies the second threshold, or both, the controller 132 determines that the shock strut 114 transitioned to a dynamic state.

The resonance system 128 performs one or more iterations of the following procedures responsive to providing the first signal(s) to one or more of the shock struts 114 associated with the resonance system 128. When one or more shock struts 114 transition to the dynamic state, the controller includes logic that stops transmission of the first signal(s) to the shock strut(s) 114 that transitioned to the dynamic state and stops additional first signal(s) generated after increasing the counter from being sent to the shock strut(s) 114 that transitioned to the dynamic state, determines the type of friction force at the dynamic-static transition for each shock strut 114 that transitioned to the dynamic state, sets the warning indicator for each shock strut 114 that transitioned to the dynamic state to a logical false; and sets the friction force indicator in the data structure for each shock strut 114 that transitioned to the dynamic state to a value corresponding to the type of friction force at the dynamic-static transition, determines a gas temperature and gas pressure for each shock strut 114 at the dynamic-static transition for the shock strut(s) 114 that transitioned to the dynamic state due to the first signal and stores the values in the corresponding gas temperature and gas pressure entries. If warning indicators for all of the shock struts 114 associated with the resonance system 128 in the data structure have logical false values, the controller 132 sends the data structure as input to the weight and balance unit 152. If the data structure includes warning indicators with logical true values, the controller 132 includes logic that increases the counter by one, and, if the counter is less than the threshold value, causes the amplifier 136 to generate and send new first signals to the one or more excitation device(s) 126 attached to the one or more shock struts 114 with warning indicators that have logic true values, and repeats the procedure. If the counter is at the threshold, the controller 132 determines the gas temperatures and gas pressures for each of the shock struts where the warning indicator is logical true and stores the values in the corresponding gas temperature and gas pressure entries and sends the data structure to the weight and balance unit 152 as input.

When the weight and balance unit 152 receives input from the resonance system(s) 128 responsive to activation signal(s) sent to the resonance system(s) 128, the weight and balance unit 152 updates the first data structure with corresponding entries from the input received from the resonance system(s) 128 and obtains the weight and balance of the aircraft 100. When the weight and balance system is the onboard weight and balance unit 152, the weight and balance unit determines the weight and balance of the aircraft 100, and when the weight and balance system is an offboard weight and balance system, the weight and balance unit 152 sends the first data structure to the offboard weight and balance system.

The weight and balance system (i.e., the weight and balance unit 152 when the weight and balance unit 152 is the onboard weight and balance system; or the offboard weight and balance system) analyzes the first data structure to determine if any of the warning indicators associated with the shock struts 114 are logical true. If one or more of the warning indicators are logical true, the weight and balance system determines a type of friction force associated with each shock strut 114 with a warning indicator that is logical true. The type is determined based on the type associated with another of the shock struts 114, with the type for the shock strut 114 before use of the excitation device(s) 126 attached to the shock struts 114 with warning indicators that are true, or both. For example, if a first shock strut 114 of the right main landing gear 104 has a warning indicator that is logical true and the left main landing gear 104 has a warning indicator that is logical false, the weight and balance system changes the value for the type of friction force for the shock strut 114 of the right main landing gear 104 to the value corresponding to the type of friction force for the shock strut 114 of the left main landing gear 104. As another example, if all of the shock struts 114 have warning indicators that are logical true, the weight and balance system changes the types of the friction forces for each of the shock struts 114 to the values corresponding to the types of the most recent dynamic-static transition before activation of the excitation devices 126. The weight and balance system includes a plurality of rules for handling different scenarios when one or more of the warning indicators for one or more of the shock struts 114 are logical true, which may include changing one or more type of friction force indicators to a value corresponding to compression friction force or static friction force, or leaving one or more type of friction force indicators alone to indicate that no correction factor is to be used in association with the corresponding shock strut when determining the weight and balance of the aircraft.

After use of the rules to handle any warning indicators that are logical true, the weight and balance system determines the weight and balance of the aircraft 100 based on appropriate entries in the first data structure and parameters associated with the aircraft 100. For each landing gear 104, the vertical load on the shock strut 114 is determined using equation (12) with an appropriate correction factor when the type of friction force indicator for the shock strut 114 in the first data structure indicates compression friction force, is determined using equation (13) with an appropriate correction factor when the type of friction force indicator for the shock strut 114 in the first data structure indicates expansion friction force, and is determined using equation (12) or (13) with a correction value of 0 when the type of friction force indicator for the shock strut 114 in the first data structure does not indicate either compression friction force or expansion friction force. In some implementations, the appropriate correction factor may be a first value (e.g., 0.025) for a shock strut 114 when the gas temperature in the first data structure for the shock strut 114 is in a particular temperature range, a second value (e.g., 0.023) when the gas temperature in the first data structure for the shock strut 114 is above the particular temperature range, and a third value (e.g., 0.027) when the gas temperature in the first data structure for the shock strut 114 is below the particular temperature range. In other implementations, the appropriate correction factor is determined based on one or more correction factor values retrieved from a correction factor table based on the gas temperature in the first data structure for the shock strut 114.

The vertical load on the ground for each landing gear 104 is determined using equation (6) using the appropriate vertical load for the shock strut 114 of the landing gear 104. The weight of the aircraft 100 is then determined using equation (1) and one or more CGs are determined using one or more of equations (2)-(5). If the weight and balance system is the offboard weight and balance system, the weight and balance system sends output back to the weight and balance unit 152 that includes the weight of the aircraft 100 and the determined CG(s) as the balance of the aircraft 100.

The weight and balance unit 152 provides the first output indicating the weight and balance of the aircraft 100 to the flight computer(s) 134. The first output includes the weight of the aircraft 100, the balance of the aircraft 100 as one or more CGs, and a logical true value associated with each shock strut 114 that has a warning indicator in the first data structure that is logical true. The flight computer(s) generate information based on the first output to one or more output devices (e.g., one or more display devices 154, one or more external devices 156 associated with a load master, warnings to audio devices or haptic devices, etc.).

The weight and balance unit 152 stores historical data regarding warning indicators that are true. If the warning indicators for a particular shock strut 114 are logical true for a threshold number of consecutive loading/unloading cycles (e.g., 5, 6, or some other number of consecutive loading cycles), the weight and balance unit 152 causes maintenance of the resonance system 128 and excitation device(s) 126 associated with the particular shock strut to be scheduled.

FIG. 2 depicts a side view representation of a portion of an implementation of the aircraft 100 on ground 202. The ground 202 depicted in FIG. 2 is level relative to an earth-based coordinate system having a first axis 204; a second axis orthogonal to the first axis 204; and a third axis orthogonal to the first axis 204, the second axis, and passing through the center of the earth. In other situations, the ground 202 may be at a non-zero angle relative to the first axis 204, the second axis, or both. The aircraft 100 includes a fore-aft axis 206, which is a longitudinal axis of the aircraft 100 relative to a coordinate system of the aircraft 100, and the pitch angle, *θ*, is the angle between the first axis 204 and the fore-aft axis 206.

Friction surfaces (e.g., a portion of the outer surface of the inner cylinder 122, a portion of the inner surface of the outer cylinder 120, and contact surfaces of the bearings) of the shock strut 114 of the nose landing gear 104A have a first rake angle, γ_{A}, relative to an aircraft coordinate system (e.g., relative to a perpendicular 208A to the fore-aft axis 206). In the implementation of FIG. 2, the right main landing gear 104B, and the left main landing gear are each offset from a reference point the same longitudinal distance and are offset the same side-to-side distance from the first axis 204. Each of the friction surfaces of the right main landing gear 104B and the left main landing gear are at a second rake angle, γ_{B}, relative to the aircraft coordinate system (e.g., relative to a perpendicular 208B to the fore-aft axis 206). Values of the rake angles γ_{A}, γ_{B} and the offset distances are part of a landing gear configuration for the aircraft 100 and are stored in the data 148 of the memory 144, the memory of the offboard weight and balance system, or both. The values are used by the weight and balance system (e.g., the weight and balance unit 152 when the weight and balance unit 152 is the onboard weight and balance system) to obtain the weight and CG of the aircraft 100. In some implementations, one or both of rake angles γ_{A}, γ_{B} are zero.

The computer system 110 and weight and balance unit 152 depicted in FIG. 2 are represented in dashed lines to indicate that the computer system 110 and the weight and balance unit are not visible from the outside of the aircraft 100. The computer system 110, during execution of the weight and balance unit 152 obtains the weight and balance of the aircraft 100 by performing calculations or by receiving the weight and balance in response to input provided by the weight and balance unit 152 to an offboard weight and balance system. Excitation devices 126 are coupled to the shock struts 114 of the landing gear 104A, 104B. The excitation devices are configured to vibrate the shock struts 114 in response to signals received from the computer system 110. The excitation devices 126 are electrically coupled to the computer system 110 by wiring (not shown) or wirelessly.

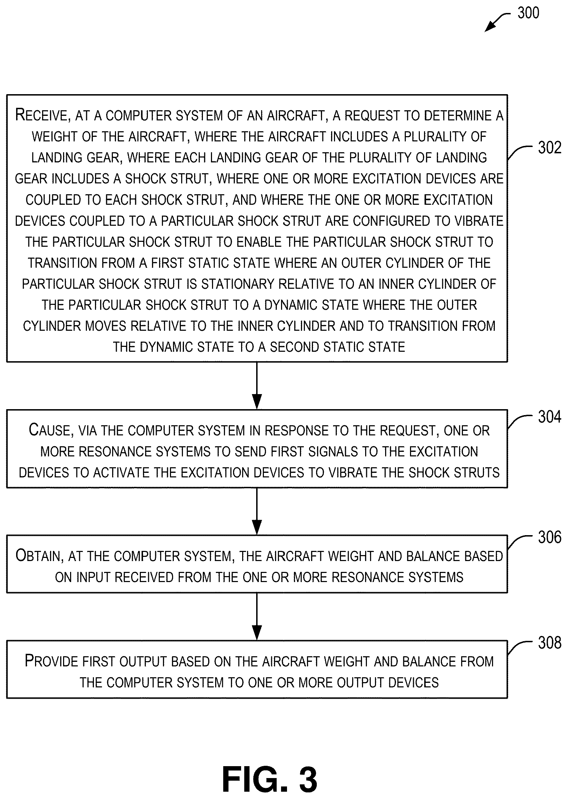

FIG. 3 depicts a flow chart of an implementation of a method 300 of use of a computer system of an aircraft to cause vibration of shock struts to relieve a portion of static friction forces acting on the shock struts before determination of aircraft weight and balance. The method 300 may be performed by the computer system 110 of the aircraft 100 depicted in FIG. 1. The method 300 utilizes the flight computer(s) 134 and the resonance system(s) 128.

The method 300, at block 302, includes receiving, at a computer system of the aircraft, a request to determine a weight of the aircraft. The aircraft includes a plurality of landing gear and each landing gear of the plurality of landing gear includes a shock strut. One or more excitation devices are coupled to each shock strut. The one or more excitation devices coupled to a particular shock strut are configured to vibrate the particular shock strut to enable the particular shock strut to transition from a first static state where an outer cylinder of the particular shock strut is stationary relative to an inner cylinder of the particular shock strut to a dynamic state where the outer cylinder moves relative to the inner cylinder and to transition from the dynamic state to a second static state. For example, the computer system 110 of the aircraft 100 receives user input from a load master, or a ground crew member, after completion of a loading/unloading cycle for the aircraft 100, or the computer system determines that the loading/unloading cycle is complete, and the computer system 110 sends a request to the flight computer(s) 134 to determine the aircraft weight and balance in response to the user input, the determination that the loading/unloading cycle is complete, or both.

The method 300, at block 304, includes causing, via the computer system in response to the request, one or more resonance systems to send first signals to the excitation devices to activate the excitation devices to vibrate the shock struts. For example, the processor(s) 142 of the flight computer(s) 134 execute the weight and balance unit 152 to send an activation signal to each of the resonance system(s) 128. In response to the activation signal(s), the resonance system(s) execute one or more iterations, up to a threshold number of iterations by generating first signals and providing the first signals to the excitation devices 126 attached to the shock struts 114 of the landing gear 104 of the aircraft.

A controller 132 of each resonance system 128 processes sensor data (e.g., temperature data, pressure data, and positioned data) associated with shock struts 114 coupled to the resonance system 128 to determine whether the shock struts 114 transitioned from static states to dynamic states responsive to vibrations of the excitation device(s) 126 attached to the shock struts 114 provided to the shock struts 114. If all of the shock struts coupled to the resonance system 128 transitioned to the dynamic state or the threshold number of iterations is exceeded, the controller provides input data to the weight and balance unit 152 based on the sensor data associated with the shock struts 114.

The method 300, at block 306, includes obtaining, at the computer system, the aircraft weight and balance based on input received from the one or more resonance systems. For example, execution of the weight and balance unit 152 by the processor(s) 142 of the flight computer(s) 134 updates values in a first data structure based on the input received from the resonance system(s) 128 in response to the activation signal(s) sent to the resonance system(s) 128. Execution of the weight and balance unit 152 causes the weight and balance unit 152 to obtain the aircraft weight and balance by calculating the aircraft weight and balance, or by receiving the aircraft weight and balance responsive to sending the first data structure to an offboard weight and balance system.

Also, the method 300, at block 308, includes providing first output based on the aircraft weight and balance from the computer system to one or more output devices. For example, execution of the weight and balance unit 152 by the processor(s) 142 of the flight computer(s) 134 causes the weight and balance unit 152 to provide the aircraft weight and balance and information identifying any landing gear 104 with a shock strut 114 that did not transition to a dynamic state responsive to vibrations caused by excitation device(s) 126 attached to the shock strut 114 to flight system(s) 150 executed by the processor(s) 142 of the flight computer(s) 134. The flight system(s) 150, responsive to user input, or automatically in response to satisfaction of one or more conditions, provide output to one or more output devices (e.g., display device(s) 154, external devices 156, audio devices, haptic devices, or other devices).

In some examples, the method 300 may further comprise determining, at the computer system 110, a change in position of the outer cylinder 120 of a first shock strut 114 relative to the inner cylinder 122 of the first shock strut 114 due to vibration of the first shock strut 114 responsive to the first signal sent to the one or more excitation devices 126 of the excitation devices 126, wherein positions of the outer cylinder 120 relative to the inner cylinder 122 before and after vibration of the first shock strut 114 for a first time period responsive to the first signal are determined based on output of one or more position sensors 162 coupled to the first shock strut 114, and in response to the change in position satisfying a first threshold, determining, via the computer system 110, a vertical ground load of a first landing gear 104 that includes the first shock strut 114 based on output of one or more pressure sensors 158 coupled to the first shock strut 114 to measure gas pressure in the first shock strut 114. That is, the computer system 110 may evaluate whether vibration of a particular shock strut 114 (e.g., first shock strut 114) has produced relative motion between the outer cylinder 120 and the inner cylinder 122 of the shock strut 114 and, when such motion is detected, determines a corresponding vertical ground load of the landing gear 104 that includes the shock strut 114. In these implementations, the computer system 110 receives from one or more resonance systems 128 an indication that a first signal has been sent to one or more excitation devices 126 coupled to the first shock strut 114 and, responsive to this indication, acquires position data from one or more position sensors 162 coupled to the first shock strut 114 both immediately before and after vibration of the first shock strut 114 during a first time period associated with the first signal. The computer system 110 stores a first position value corresponding to the state of the first shock strut 114 before application of the first signal and a second position value corresponding to the state of the first shock strut 114 after vibration during the first time period and determines a change in position by comparing the second position value to the first position value. When the determined change in position satisfies the first threshold value indicative of a transition of the first shock strut 114, the computer system 110 acquires pressure data from one or more pressure sensors 158 coupled to the first shock strut 114 to measure the gas pressure within the first shock strut 114. The computer system 110 then determines the vertical ground load of a first landing gear 104 that includes the first shock strut 114 based on the gas pressure measured by the pressure sensors 158.

In some examples, in response to the change in position failing to satisfy the first threshold and in response to a second determination that a count of iteration cycles for a resonance system of the one or more resonance systems coupled to the first shock strut 114 satisfies a threshold value, the method 300 may further comprise generating via the computer system 110 a new first signal, providing via the computer system 110 the new first signal to the one or more excitation devices 126 for a second time period to vibrate the first shock strut 114, and in response to a determination that a second change in position of the outer cylinder 120 relative to the inner cylinder 122 satisfies the first threshold, determining via the computer system (110) the vertical ground load of the first landing gear 104 based on output of the one or more pressure sensors 158. That is, when the computer system 110 determines, based on output of the position sensors 162, that an initial change in position of the outer cylinder 120 relative to the inner cylinder 122 of the first shock strut 114 during the first time period associated with the first signal does not satisfy the first threshold, the computer system 110 can initiate additional vibration cycles for the first shock strut 114. For example, the computer system 110 may maintain, for each resonance system 128 coupled to the shock strut 114, a count of iteration cycles performed after a request to determine the weight of the aircraft 100 is received. When this count for a resonance system 128 associated with the first shock strut 114 satisfies a predetermined threshold value, the computer system 110 generates, or causes the resonance system 128 to generate, the new first signal and provides the new first signal to the excitation devices 126 coupled to the first shock strut 114 for a second time period to again vibrate the first shock strut 114. During or after the second time period, the computer system 110 acquires updated position data from the position sensors 162 coupled to the first shock strut 114 and determines a second change in position of the outer cylinder 120 relative to the inner cylinder 122 by comparing the updated position data to position data obtained before application of the new first signal. When this second change in position satisfies the first threshold, the computer system 110 determines a vertical ground load of a first landing gear 104 that includes the first shock strut 114 based on output of one or more pressure sensors 158 coupled to the first shock strut 114 to measure gas pressure in the first shock strut 114.

In some examples, the second time period is longer than the first time period, wherein a power of the new first signal is greater than a power of the first signal, or both. That is, when additional vibration cycles are initiated for the first shock strut 114 as described above, the computer system 110 adjusts one or more characteristics of the new first signal to increase the likelihood that the first shock strut 114 will undergo sufficient relative motion between the outer cylinder 120 and the inner cylinder 122. For example, the computer system 110 may cause the resonance system 128 associated with the first shock strut 114 to provide the new first signal to the excitation devices 126 coupled to the first shock strut 114 for a second time period that is longer than the first time period associated with the original first signal, thereby subjecting the first shock strut 114 to vibration over a greater duration. Additionally or alternatively, the computer system 110 may instruct the controller 132 and the amplifier 136 of the resonance system 128 to apply a higher gain to the new first signal such that a power of the new first signal is greater than a power of the original first signal, which results in vibration of the first shock strut 114 with increased amplitude. In some examples, both the duration and the power of the new first signal are increased relative to the first signal, while in other examples only one of the duration or the power is increased between activation cycles.

In some examples, in response to the change in position failing to satisfy the first threshold and in response to a determination that a number of activation cycles for the one or more excitation devices 126 fails to satisfy a second threshold, the method 300 may further comprise determining via the computer system 110 a vertical ground load of the first landing gear 104 based on output of the one or more pressure sensors 158, and generating an alert to associate with the weight of the aircraft 110, a center of gravity of the aircraft 110, or both, based on the vertical ground load of the landing gear 104. That is, when the computer system 110 determines, based on output of the position sensors 162, that a change in position of the outer cylinder 120 relative to the inner cylinder 122 of the first shock strut 114 during the first time period associated with the first signal does not satisfy the first threshold, and further determines that a current number of the activation cycles performed for the excitation devices 126 coupled to the first shock strut 114 is less than the second threshold representing a maximum number of vibration attempts, the computer system 110 determines a vertical ground load of the first landing gear 104 that includes the first shock strut 114 based on output of one or more pressure sensors 158 coupled to the first shock strut 114. In these implementations, the computer system 110 acquires gas pressure data from the pressure sensors 158 for the first shock strut 114, applies one or more load calculation relationships described herein to obtain the vertical ground load of the first landing gear 104, and uses this vertical ground load in determining the weight of the aircraft 100, a center of gravity of the aircraft 100, or both. To reflect the increased uncertainty associated with the vertical ground load of the first landing gear 104, the computer system 110 also generates an alert that is associated with the calculated weight of the aircraft 100, the calculated center of gravity of the aircraft 100, or both. The alert may be stored together with the weight and balance data used by a weight and balance unit 152, and may be provided to one or more flight systems 150 for presentation on display devices 154 or external devices 156 to indicate that one or more landing gear 104 include shock struts 114 for which vibration by the excitation devices 126 did not produce a measured change in position that satisfies the first threshold.

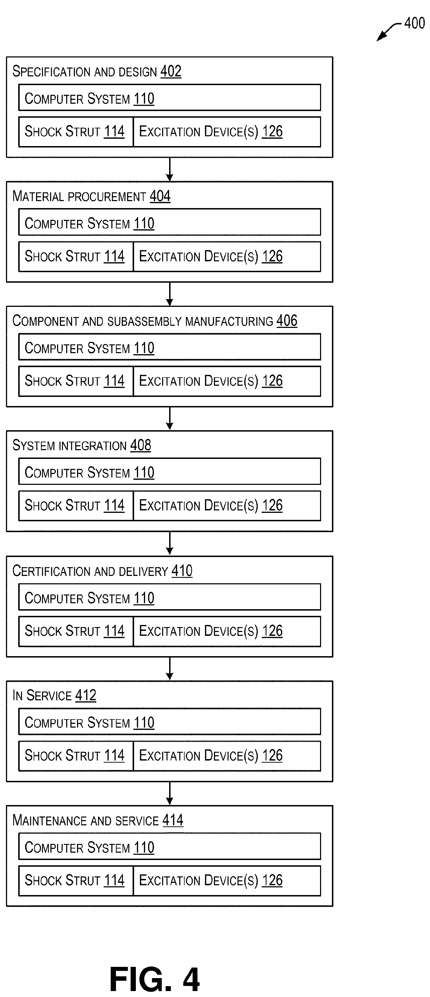

FIG. 4 is a flowchart illustrating a method 400 representing a life cycle of an aircraft 100 that includes the computer system 110 and the shock struts 114 with attached excitation devices 126 of the aircraft depicted in FIG. 1. During pre-production, the exemplary method 400 includes, at block 402, specification and design of the aircraft 100. During specification and design of the aircraft 100, the method 400 may include specification and design of the resonance systems 128, weight and balance unit 152 of the flight computer(s) 134, prediction of values of parameters associated with the aircraft 100 that are subsequently used by the computer system 110, specification of the shock struts 114 and the excitation mounts for the shock struts 114, and specification of the excitation device(s) 126 for each shock strut 114. Such parameters include rake angles of extended landing gear 104, applied force surface area A of each shock strut 114, weight of each landing gear 104 unsupported by gas of the shock strut 114 associated with the landing gear 104, axial distances relative to a coordinate system from a reference point to effective ground contact locations of the landing gear 104 relative to a reference point, etc. Values of the parameters may be adjusted to correspond to actual values after production of the aircraft 100.

At block 404, the method 400 includes material procurement, which may include procuring the computer system 110 and other components of the aircraft 100. During production, the method 400 includes, at block 406, component and subassembly manufacturing and, at block 408, system integration of the aircraft 100.

At block 410, the method 400 includes certification and delivery of the aircraft 100 and, at block 412, placing the aircraft 100 in service. Certification and delivery may include certification of the computer system 110 to place the aircraft 100 in service. At block 414, the method 400 includes performing maintenance and service on the aircraft 100, which may include modification, reconfiguration, refurbishment, replacement, and so on, of one or more systems of the aircraft 100. Service and maintenance of the computer system 110 may include updating the correction factors based on comparisons of calculated weights to actual weights from calibrated weight scales the aircraft 100 is positioned on.

Each of the processes of the method 400 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

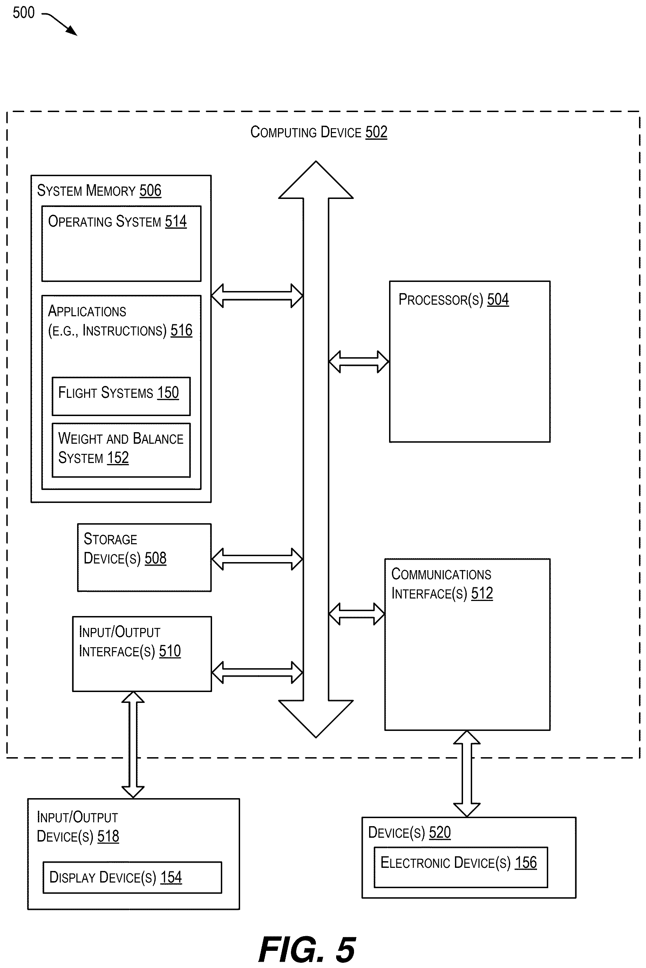

FIG. 5 is an illustration of a block diagram of a computing environment 500 including a computing device 502 configured to support implementations of computer-implemented methods and computer-executable program instructions (or code) according to the present disclosure. For example, the computing device 502, or portions thereof, may execute instructions to perform, or cause equipment to perform, operations described with reference to FIGS. 1-4. In implementations, computing devices 502 are, or are components of, the aircraft 100, the computer system 110, the resonance system(s) 128, the LRUs 130, the controller 132, the flight computer(s) 134, the amplifier 136, the synchronizer 138, and the splitter.

The computing device 502 includes one or more processors 504. The processor 504 communicates with a system memory 506, one or more storage devices 508, one or more input/output interfaces 510, one or more communications interfaces 512, or a combination thereof. The system memory 506 includes non-transitory computer readable media, including volatile memory devices (e.g., random access memory (RAM) devices), nonvolatile memory devices (e.g., read-only memory (ROM) devices, programmable read-only memory, and flash memory), or both. The system memory 506 includes an operating system 514, which may include a basic input/output system for booting the computing device 502 as well as a full operating system to enable the computing device 502 to interact with users, other programs, and other devices. The system memory 506 includes one or more applications 516 (e.g., instructions) which are executable by the processor 504. For example, when the computing device 502 is the flight computer 134, the one or more applications 516 include the flight systems 150 and the weight and balance unit 152.

In some configurations, the processor 504 communicates with the one or more storage devices 508. For example, the storage device 508 includes non-transitory computer readable media that can include nonvolatile storage devices, such as magnetic disks, optical disks, or flash memory devices. The storage devices 508 can include both removable and non-removable memory devices. The storage devices 508 can be configured to store an operating system, images of operating systems, applications, and program data. In particular implementations, the system memory 506, the storage device 508, or both, include tangible computer-readable media incorporated in hardware and which are not signals.

In some configurations, the processor 504 communicates with the one or more input/output interfaces 510 that enable the computing device 502 to communicate with one or more input/output devices 518 (e.g., display device(s) 154) to facilitate user interaction. The input/output interfaces 510 can include serial interfaces (e.g., universal serial bus (USB) interfaces or Institute of Electrical and Electronics Engineers (IEEE) interfaces), parallel interfaces, display adapters, audio adapters, and other interfaces ("IEEE" is a registered trademark of The Institute of Electrical and Electronics Engineers, Inc. of Piscataway, New Jersey). The input/output devices 518 can include keyboards, pointing devices, displays (e.g., one or more monitors, one or more gauges, etc.), speakers, microphones, touch screens, rotatable selectors, levers, knobs, slides, switches, and other devices. The processor 504 detects interaction events based on user input received via the input/output interfaces 510. Additionally, the processor 504 sends a display to a display device via the input/output interfaces 510.

In some configurations, the processor 504 can communicate with one or more devices 520 via the one or more communications interfaces 512. The one or more devices 520 can include external computing devices contacted via a communication network and controllers, sensors, and other devices coupled to the computing device 502 via wired or wireless local connections. For example, when the computing device 502 is part of the computer system 110, the computing device 502 is configured to communicate via the communication interface(s) 512 with devices external to the aircraft 100 such as an external device 156 (e.g., a portable device) associated with the loadmaster responsible for loading or unloading the aircraft 100. The one or more communications interfaces 512 may include wired Ethernet interfaces, IEEE 802 wireless interfaces, other wireless communication interfaces, one or more converters to convert analog signals to digital signals, electrical signals to optical signals, one or more converters to convert received optical signals to electrical signals, or other network interfaces.

In some implementations, a non-transitory, computer readable medium stores instructions that, when executed by one or more processors, cause the one or more processors to initiate, perform, or control operations to perform part or all of the functionality described above. For example, the instructions may be executable to implement one or more of the operations or methods described herein in association with FIGS. 1-5. In some implementations, part or all of one or more of the operations or methods described herein in association with FIGS. 1-5 may be implemented by one or more processors (e.g., one or more central processing units (CPUs), one or more graphics processing units (GPUs), one or more digital signal processors (DSPs), one or more application specific integrated circuits (ASICS), etc.) executing instructions, by dedicated hardware circuitry, or both.

Particular aspects of the disclosure are described below in sets of interrelated non-limiting Examples:
According to Example 1, a system for an aircraft includes: a shock strut of a landing gear; one or more excitation devices coupled to the shock strut, wherein the one or more excitation devices are configured to vibrate the shock strut to enable the shock strut to transition from a first static state where an outer cylinder of the shock strut is stationary relative to an inner cylinder of the shock strut to a dynamic state where the outer cylinder moves relative to the inner cylinder and to transition from the dynamic state to a second static state; and a resonance system coupled to the one or more excitation devices, wherein the resonance system is configured to provide signals to the one or more excitation devices to activate the one or more excitation devices to vibrate the shock strut.

Example 2 includes the system of Example 1, wherein the resonance system comprises at least one of a controller, an amplifier, a synchronizer, or combinations thereof.

Example 3 includes the system of Example 1 or Example 2, further comprising one or more position sensors coupled to the shock strut, wherein the one or more position sensors are configured to enable determination of travel of the inner cylinder relative to the outer cylinder.

Example 4 includes the system of any of Examples 1 to 3, wherein an excitation device of the one or more excitation devices includes at least one of an electromagnetic shaker, a piezo electric actuator, or both.

Example 5 includes the system of any of Examples 1 to 4 and further includes one or more pressure sensors coupled to the shock strut, wherein the one or more pressure sensors are configured to measure gas pressure in the shock strut.

Example 6 includes the system of Example 5 and further includes a computer system configured to determine a vertical ground load of the landing gear based on output of the one or more pressure sensors after activation of the one or more excitation devices, a weight of the aircraft, a center of gravity of the aircraft, or combinations thereof.

According to Example 7, an aircraft includes: a plurality of landing gear, wherein each landing gear of the plurality of landing gear includes a shock strut; one or more excitation devices coupled to each shock strut, wherein the one or more excitation devices coupled to a particular shock strut are configured to vibrate the particular shock strut to enable the particular shock strut to transition from a first static state where an outer cylinder of the particular shock strut is stationary relative to an inner cylinder of the particular shock strut to a dynamic state where the outer cylinder moves relative to the inner cylinder and to transition from the dynamic state to a second static state; and one or more resonance systems coupled to the excitation devices, wherein one or more resonance systems are configured to provide first signals to the excitation devices to activate the excitation devices to vibrate the shock struts.

Example 8 includes the aircraft of Example 7, further comprising one or more controllers, one or more amplifiers, or both, configured to provide a first signal to each of the one or more excitation devices.

Example 9 includes the aircraft of Example 8, wherein the particular shock strut is a component of a nose landing gear, and wherein the one or more controllers include a first controller configured to provide the first signal to each of the one or more excitation devices coupled to the particular shock strut.

Example 10 includes the aircraft of Example 8, wherein the particular shock strut is a component of a first main landing gear, and wherein the one or more controllers include a second controller configured to provide the first signal to each of the one or more excitation devices coupled to the particular shock strut.

Example 11 includes the aircraft of Example 10, wherein the second controller is further configured to provide the first signal to one or more second excitation devices coupled to a second shock strut, and wherein the second shock strut is a component of a second main landing gear.

Example 12 includes the aircraft of any of Examples 7 to 11 and further includes a plurality of pressure sensors coupled to the shock struts, wherein each pressure sensor of the plurality of pressure sensors is configured to measure gas pressure in a corresponding shock strut.

Example 13 includes the aircraft of Example 12 and further includes a computer system, wherein the computer system is configured to determine a vertical ground load of each landing gear based on output of the one or more pressure sensors, and wherein the computer system is further configured to determine a weight of the aircraft, a center of gravity of the aircraft, or both, based on vertical ground loads.

According to Example 14, a method includes: receiving, at a computer system of an aircraft, a request to determine a weight of the aircraft, wherein the aircraft includes a plurality of landing gear and each landing gear of the plurality of landing gear includes a shock strut, wherein one or more excitation devices are coupled to each shock strut, and wherein the one or more excitation devices coupled to a particular shock strut are configured to vibrate the particular shock strut to enable the particular shock strut to transition from a first static state where an outer cylinder of the particular shock strut is stationary relative to an inner cylinder of the particular shock strut to a dynamic state where the outer cylinder moves relative to the inner cylinder and to transition from the dynamic state to a second static state; and causing, via the computer system in response to the request, one or more resonance systems to send first signals to the excitation devices to vibrate the shock struts.

Example 15 includes the method of Example 14, and further includes: determining, at the computer system, a change in position of the outer cylinder of a first shock strut relative to the inner cylinder of the first shock strut due to vibration of the first shock strut responsive to a first signal sent to one or more excitation devices of the excitation devices, wherein positions of the outer cylinder relative to the inner cylinder before and after vibration of the first shock strut for a first time period responsive to the first signal are determined based on output of one or more position sensors coupled to the first shock strut; and in response to the change in position satisfying a first threshold, determining, via the computer system, a vertical ground load of a first landing gear that includes the first shock strut based on output of one or more pressure sensors coupled to the first shock strut to measure gas pressure in the first shock strut.

Example 16 includes the method of Example 15, and further includes, in response to the change in position failing to satisfy the first threshold and in response to a second determination that a count of iteration cycles for a resonance system of the one or more resonance systems coupled to the first shock strut satisfies a threshold value: generating, via the computer system, a new first signal; providing, via the computer system, the new first signal to the one or more excitation devices for a second time period longer to vibrate the first shock strut; and in response to a determination that a second change in position of the outer cylinder relative to the inner cylinder satisfies the first threshold, determining, via the computer system, the vertical ground load of the first landing gear based on output of the one or more pressure sensors.

Example 17 includes the method of Example 16, wherein the second time period is longer than the first time period, wherein a power of the new first signal is greater than a power of the first signal, or both.

Example 18 includes the method of any of Examples 15 to 18, and further including, in response to the change in position failing to satisfy the first threshold and in response to a determination that a number of activation cycles for the one or more excitation devices fails to satisfy a second threshold: determining, via the computer system, a vertical ground load of the first landing gear based on output of the one or more pressure sensors; and generating an alert to associate with the weight of the aircraft, a center of gravity of the aircraft, or both, based on the vertical ground load of the landing gear.

Example 19 includes the method of any of Examples 14 to 18, wherein one or more pressure sensors are coupled to each shock strut to measure gas pressure in each shock strut, and further includes determining, via the computer system after provision of the first signals, a vertical ground load of each landing gear based on output of the one or more pressure sensors; and determining, via the computer system, the weight of the aircraft, a center of gravity of the aircraft, or both, based on the vertical ground load of each landing gear.

Example 20 includes the method of any of Examples 14 to 19, wherein a first weight of the aircraft is determined after the aircraft comes to a stop after taxiing to a gate or stand.

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims and their equivalents.

## Claims

1. A system for an aircraft (100), the system comprising:
a shock strut (114) of a landing gear (104);
one or more excitation devices (126) coupled to the shock strut (114), wherein the one or more excitation devices (126) are configured to vibrate the shock strut (114) to enable the shock strut (114) to transition from a first static state where an outer cylinder (120) of the shock strut (114) is stationary relative to an inner cylinder (122) of the shock strut (114) to a dynamic state where the outer cylinder (120) moves relative to the inner cylinder (122) and to transition from the dynamic state to a second static state; and
a resonance system (128) coupled to the one or more excitation devices (126), wherein the resonance system (128) is configured to provide signals to the one or more excitation devices (126) to activate the one or more excitation devices (126).

2. The system of claim 1, wherein the resonance system (128) comprises at least one of a controller (132), an amplifier (136), a synchronizer (138), or combinations thereof.

3. The system of claim 1 or 2, further comprising one or more position sensors (162) coupled to the shock strut (114), wherein the one or more position sensors (162) are configured to enable determination of travel of the inner cylinder (122) relative to the outer cylinder (120).

4. The system of any one of claims 1 to 3, wherein an excitation device (126) of the one or more excitation devices (126) includes at least one of an electromagnetic shaker, a piezo electric actuator, or both.

5. The system of any one of claims 1 to 4, further comprising one or more pressure sensors (158) coupled to the shock strut (114), wherein the one or more pressure sensors (158) are configured to measure gas pressure in the shock strut (114).

6. The system of claim 5, further comprising a computer system (110) configured to determine a vertical ground load of the landing gear (104) based on output of the one or more pressure sensors (158) after activation of the one or more excitation devices (126), a weight of the aircraft (100), a center of gravity of the aircraft (100), or combinations thereof.

7. An aircraft (100) comprising:
a plurality of landing gear (104), wherein each landing gear (104) of the plurality of landing gear (104) includes a shock strut (114);
one or more excitation devices (126) coupled to each shock strut (114), wherein the one or more excitation devices (126) coupled to a particular shock strut (114) are configured to vibrate the particular shock strut (114) to enable the particular shock strut (114) to transition from a first static state where an outer cylinder (120) of the particular shock strut (114) is stationary relative to an inner cylinder (122) of the particular shock strut (114) to a dynamic state where the outer cylinder (120) moves relative to the inner cylinder (122) and to transition from the dynamic state to a second static state; and
one or more resonance systems (128) coupled to the excitation devices (126), wherein one or more resonance systems (128) are configured to provide first signals to the excitation devices (126) to activate the excitation devices (126).

8. The aircraft (100) of claim 7, further comprising one or more controllers (132), one or more amplifiers (136), or both, configured to provide a first signal to each of the one or more excitation devices (126).

9. The aircraft (100) of claim 8, wherein the particular shock strut (114) is a component of a nose landing gear (104A), and wherein the one or more controllers (132) include a first controller (132) configured to provide the first signal to each of the one or more excitation devices (126) coupled to the particular shock strut (114).

10. The aircraft (100) of claim 8, wherein the particular shock strut (114) is a component of a first main landing gear (104B), and wherein the one or more controllers (132) include a second controller (132) configured to provide the first signal to each of the one or more excitation devices (126) coupled to the particular shock strut (114).

11. A method (300) comprising:
receiving (302), at a computer system (110) of an aircraft (100), a request to determine a weight of the aircraft (100), wherein the aircraft (100) includes a plurality of landing gear (104) and each landing gear (104) of the plurality of landing gear (104) includes a shock strut (114), wherein one or more excitation devices (126) are coupled to each shock strut (114), and wherein the one or more excitation devices (126) coupled to a particular shock strut (114) are configured to vibrate the particular shock strut (114) to enable the particular shock strut (114) to transition from a first static state where an outer cylinder (120) of the particular shock strut (114) is stationary relative to an inner cylinder (122) of the particular shock strut (114) to a dynamic state where the outer cylinder (120) moves relative to the inner cylinder (122) and to transition from the dynamic state to a second static state; and
causing (304), via the computer system (110) in response to the request, one or more resonance systems (128) to send first signals to the excitation devices (126) to vibrate the shock struts (114).

12. The method of claim 11, further comprising:
determining, at the computer system (110), a change in position of the outer cylinder (120) of a first shock strut (114) relative to the inner cylinder (122) of the first shock strut (114) due to vibration of the first shock strut (114) responsive to the first signal sent to the one or more excitation devices (126) of the excitation devices (126), wherein positions of the outer cylinder (120) relative to the inner cylinder (122) before and after vibration of the first shock strut (114) for a first time period responsive to the first signal are determined based on output of one or more position sensors (162) coupled to the first shock strut (114); and
in response to the change in position satisfying a first threshold, determining, via the computer system (110), a vertical ground load of a first landing gear (104) that includes the first shock strut (114) based on output of one or more pressure sensors (158) coupled to the first shock strut (114) to measure gas pressure in the first shock strut (114).

13. The method of claim 12, further comprising, in response to the change in position failing to satisfy the first threshold and in response to a second determination that a count of iteration cycles for a resonance system of the one or more resonance systems coupled to the first shock strut (114) satisfies a threshold value:
generating, via the computer system (110), a new first signal;
providing, via the computer system (110), the new first signal to the one or more excitation devices (126) for a second time period to vibrate the first shock strut (114); and
in response to a determination that a second change in position of the outer cylinder (120) relative to the inner cylinder (122) satisfies the first threshold, determining, via the computer system (110), the vertical ground load of the first landing gear (104) based on output of the one or more pressure sensors (158).

14. The method of claim 12 or 13, further comprising, in response to the change in position failing to satisfy the first threshold and in response to a determination that a number of activation cycles for the one or more excitation devices (126) fails to satisfy a second threshold:
determining, via the computer system (110), a vertical ground load of the first landing gear (104) based on output of the one or more pressure sensors (158); and
generating an alert to associate with the weight of the aircraft (110), a center of gravity of the aircraft (110), or both, based on the vertical ground load of the landing gear (104).

15. The method of any one of claims 11 to 14, wherein one or more pressure sensors (158) are coupled to each shock strut (114) to measure gas pressure in each shock strut (114), and further comprising:
determining, via the computer system (110) after provision of the first signals, a vertical ground load of each landing gear (104) based on output of the one or more pressure sensors (158); and
determining, via the computer system (110), the weight of the aircraft (110), a center of gravity of the aircraft (110), or both, based on the vertical ground load of each landing gear (104).
